Europäisches Patentamt

(19) European Patent Office

Office européen des brevets

(11) Numéro de publication: **0 055 967**
**B1**

(12) # FASCICULE DE BREVET EUROPEEN

(45) Date de publication du fascicule du brevet:
**22.08.84**

(21) Numéro de dépôt: **81402092.1**

(22) Date de dépôt: **30.12.81**

(51) Int. Cl.³: **C 02 F 3/04,** C 02 F 1/52,
C 02 F 1/58

(54) **Procédé et dispositif de traitement d'eaux résiduaires azotées.**

(30) Priorité: **31.12.80 FR 8027893**

(43) Date de publication de la demande:
**14.07.82 Bulletin 82/28**

(45) Mention de la délivrance du brevet:
**22.08.84 Bulletin 84/34**

(84) Etats contractants désignés:
**BE CH DE FR GB IT LI NL**

(56) Documents cités:
**FR - A - 2 430 395**
**FR - A - 2 450 238**
**GB - A - 2 014 978**
**US - A - 2 065 123**
**US - A - 3 423 309**
**US - A - 3 546 111**

(73) Titulaire: **SOCIETE GENERALE POUR LES
TECHNIQUES NOUVELLES S.G.N. Société anonyme
dite:, 1, rue des Hérons Montigny-le-Bretonneux,
F-78184 Saint Quentin en Yvelines Cedex (FR)**

(72) Inventeur: **Vigreux, Bernard, 48, quai Le Gallo,
F-92100 Boulogne (FR)**

(74) Mandataire: **Combe, André, CABINET BEAU DE
LOMENIE 55 rue d'Amsterdam, F-75008 Paris (FR)**

## Description

La présente invention se rapporte à l'épuration des eaux résiduaires d'origine essentiellement organique et vise plus particulièrement un procédé qui, parallèlement à l'élimination de l'essentiel des matières carbonées sous forme de gaz carbonique et de boues, permet de réduire les teneurs résiduelles des eaux clarifiées en produits azotés.

Ce procédé opère par floculation à pH élevé avec entraînement à l'air (stripping) de l'ammoniac, après un traitement de mise en forme des composés azotés sur un lit bactérien aérobie à ruissellement ayant un garnissage de mailles et de passage libre élevés, mais de grande surface spécifique utile. Il réduit aussi les rejets en phosphore, consomme peu d'énergie et se prête à une mise en régime rapide.

Les garnissages de lits bactériens sont constitués de matériaux ordonnés régulièrement ou empilés aléatoirement de façon à présenter à l'écoulement un taux de passage libre moyen sensiblement uniforme, dont l'importance peut se chiffrer par le pourcentage de vide. L'emploi de matériaux artificiels, en particulier d'assemblages de plaques ondulées ou d'anneaux en matières plastiques, permet aussi d'obtenir, avec une maille de l'ordre de 1 cm au moins, un pourcentage de vide supérieur à 90% et cependant une surface spécifique utile au support des boues supérieure à 80 $m^2/m^3$. La rugosité modérée de cette surface conduit à une adhérence des boues suffisante mais limitée, ce qui réduit la tendance au colmatage. Ce sont ces lits particuliers qui permettent de mettre en œuvre l'invention.

Si l'on examine les traitements d'oxydation biologique couramment employés, après une clarification primaire, pour l'épuration des pollutions d'origine organique, on remarque que les eaux clarifiées sortant du séparateur secondaire renferment, indépendamment d'une faible quantité de matières organiques solubles, des teneurs plus ou moins importantes en ions divers, notamment des proportions variables mais non négligeables de $NO_2^-$, $NO_3^-$, $NH_4^+$.

Divers travaux se sont proposés d'éliminer ces résidus azotés: ils ont jusqu'à présent principalement tendu à compléter les schémas d'épuration classiques, initialement afin d'obtenir l'oxydation pure et simple en nitrates, désormais afin d'éliminer réellement une part importante de ces déchets en faisant suivre cette oxydation, et l'élimination des boues secondaires, d'une étape tertiaire de réduction effectuée sur les eaux clarifiées, qui libère de l'azote gazeux; cela exige d'ailleurs une nouvelle introduction de matières carbonées, par exemple sous la forme d'une addition dosée de méthanol. C'est l'objet des divers schémas biologiques dits de nitrification-dénitrification.

Leur mise en régime est lente du fait de la nécessité de constituer et de maintenir la flore bactérienne convenable. D'autre part, dans toutes les variantes de ce procédé, en raison de l'importante demande en oxygène correspondant à l'oxydation de l'azote, la nitrification exige un fort brassage qui entraîne une consommation d'énergie importante. Il est possible d'intégrer au schéma une réutilisation des nitrates, en effectuant un recyclage vers une zone anoxique placée en tête du traitement, mais la consommation d'énergie reste importante du fait du taux de recirculation élevé qu'il faut alors adopter.

Enfin, la mise en œuvre s'effectue dans des bassins à boues activées, car elle serait difficile sur des lits bactériens fixes traditionnels, en raison de leur passage libre insuffisant eu égard aux taux de circulation élevés nécessaires et c'est révélée peu efficace sur les lits bactériens modernes à forte surface spécifique, constitués par exemple d'anneaux en matières plastiques: en raison de la difficulté d'y implanter une flore nitrifiante suffisante, on ne parvient pas à y effectuer une transformation complète de l'azote ammoniacal en nitrates.

On sait qu'il existe, d'autre part, des procédés physico-chimiques très divers, intéressants quant à la rapidité de mise en régime et dont certains permettent d'éliminer tour à tour les diverses formes d'azote, comme le passage sur des résines échangeuses d'ions, ou tout au moins l'azote présent sous forme ammoniacale, comme l'oxydation chimique par le chlore. Il s'agit cependant de procédés coûteux et qui, principalement pour cette raison, sont surtout adaptés au traitement d'effluents spéciaux, généralement d'origine industrielle.

On a toutefois constaté, dans les traitements d'épuration physico-chimiques utilisant la floculation d'un effluent brut par la chaux et opérant ainsi à pH élevé, la possibilité d'éliminer par stripping sous forme d'ammoniac une fraction de l'azote qui, après décantation, subsiste dans les effluents clarifiés, fraction généralement faible puisqu'il s'agit de celle présente dès le départ sous forme ammoniacale (GB-A N° 2014978).

Cela a conduit à envisager d'appliquer un traitement tertiaire analogue aux effluents clarifiés de certaines unités de traitement biologique, puisque ces effluents renferment aussi une fraction plus ou moins grande d'azote ammoniacal. Après séparation des boues dans le décanteur secondaire du traitement biologique on ajoute donc une unité de traitement tertiaire par augmentation du pH, l'élimination de l'ammoniac s'effectuant alors par entraînement à l'air. Ce procédé a fait l'objet de travaux assez nombreux et de certaines réalisations.

La présente invention a pour objet un procédé bio-physico-chimique de type analogue, destiné à permettre d'éliminer quasi totalement des eaux de rejets finales les résidus azotés.

Elle se fonde sur l'observation que les lits bactériens du type précité, en raison peut-être de l'adhérence limitée des boues, non seulement sont inaptes à permettre la nitrification totale de l'azote ammoniacal, mais encore ont la propriété particulière d'effectuer sans nitrification appréciable la transformation des différentes formes d'azote organique jusqu'à l'azote ammoniacal, pendant les phases initiales de la digestion des matières organiques. Elle se propose d'éviter en pratique toute nitrification des composés azotés au cours de l'étape biologique de traitement des matières carbonées ou à sa sortie, afin d'obtenir, après floculation à pH élevé, une élimination poussée de l'azote par dégazage sous forme d'ammoniac, comme exposé ci-dessus, en interrompant le traitement biologique avant transformation complète des matières carbonées, dont l'épuration totale résultera de la floculation.

L'invention concerne donc un procédé d'épuration d'eaux résiduaires qui renferment des produits organiques azotés, comprenant, après dégrillage et clarification primaire, un traitement d'oxydation biologique et une floculation suivie d'une clarification secondaire, permettant de réduire leur teneur résiduelle en produits azotés, caractérisé en ce que le traitement biologique s'effectue sur un lit bactérien aérobie à ruissellement à pourcentage de vide supérieur à 90% mais d'une surface spécifique supérieure à 80 m²/m³, interrompant le traitement biologique avant transformation complète des matières carbonées, l'augmentation consécutive de pH s'effectuant par une base forte alcalino-terreuse et provoquant la floculation que l'on fait suivre d'un dégazage par entraînement à l'air.

Selon l'invention, il y a donc lieu d'effectuer tout d'abord sur un tel lit un traitement biologique à charge élevée, le volume de ce lit en regard de la charge appliquée en demande biologique d'oxygène (DBO) conduisant à un taux d'épuration de l'ordre de 80% et en tout cas compris entre 70 et 85% environ, dans le but d'obtenir la mise en forme de l'azote en vue de stripping: la surface active du lit ne sera pas supérieure à 125 m²/kg/d de $DBO_5$ à traiter. On fait suivre ce traitement biologique d'un traitement physico-chimique de floculation par une base forte alcalino-terreuse, la chaux de préférence, puis d'un entraînement à l'air (ou stripping). La floculation permet d'obtenir, après clarification, l'épuration complémentaire nécessaire pour atteindre finalement les normes de rejet relatives aux matières oxydables ou plus précisément à la $DBO_5$, mais aussi bloque la nitrification; poussée jusqu'à un pH au moins égal à 10, elle permet enfin de déplacer l'ammoniac. Le dégazage provoqué ensuite par le stripping élimine ainsi la majeure partie des composés azotés puisque ceux-ci ont été mis sous forme ammoniacale. Une très bonne épuration des composés du phosphore est également obtenue au niveau de la floculation.

Il est bien entendu avantageux de faire précéder le traitement biologique sur le lit bactérien d'un traitement primaire de tamisage fin ou de décantation.

Dans ces conditions, du moins pour les effluents urbains ou mixtes ou pour un grand nombre d'effluents industriels, le fonctionnement du lit bactérien considéré ne réclamant pas de recyclage des boues, il est avantageux de supprimer toute clarification, décantation ou flottation entre celui-ci et le traitement à la chaux (ou à la magnésie), ce qui jette un pont vers certains schémas bio-physico-chimiques connus d'épuration des matières carbonées (US-A N° 3546111) et même d'intégrer entièrement le stripping dans le schéma d'épuration des mtières carbonées: on n'installe donc pas de décanteur (ou de flottateur) secondaire entre le lit bactérien et la tour de stripping, mais on fait passer les boues sur la tour et on reporte leur récupération au niveau de la décantation tertiaire, ce qui simplifie la mise en œuvre du procédé et permet en outre de recycler ces boues vers le décanteur primaire, après destruction de leur flore nitrifiante, pour y augmenter la concentration, sans risque de faire apparaître des rejets de nitrates, comme dans certains procédés classiques antérieurs (US-A N° 2065123).

Cela ne serait bien entendu pas possible si l'on utilisait un système à boues activées exigeant un recyclage à partir d'un décanteur secondaire, voire un lit bactérien à garnissage en matériaux naturels, même exempt de recyclage, car leur important taux de rétention des boues conduit à une nitrification partielle, même aux charges élevées envisagées, dans la mesure où l'on veut que ces charges permettent encore d'obtenir ensuite l'épuration voulue de la pollution carbonée.

Lorsque la nature du milieu récepteur n'autorise pas le rejet de l'effluent traité du fait de son pH élevé, on complétera le traitement à l'aide d'une neutralisation par l'anhydride carbonique. De façon connue en soi (US-A N° 3546111), cette carbonation peut être obtenue à partir de fumée d'origine extérieure ou, mieux encore, à partir des fumées d'un four d'incinération calcinant les boues, dont les cendres seront avantageusement réutilisées pour diminuer l'apport de chaux fraîche au stade de la floculation; conduisant à une précipitation complémentaire de carbonate de calcium, elle sera avantageusement effectuée en amont de la décantation finale du liquide, ce qui favorise le dépôt des boues et abaisse leur pH, améliorant ainsi l'épuration.

Enfin, si une fraction de l'azote de l'effluent brut se présente sous forme de nitrates, on installera avantageusement, en tête du processus, une cuve anoxique permettant de réduire ces derniers en azote ammoniacal.

L'invention concerne également un dispositif pour la mise en œuvre du procédé d'épuration des eaux résiduaires comprenant, en aval d'un étage primaire de clarification 1, un étage secondaire de traitement biologique sur un lit bactérien 2 suivi d'un étage tertiaire comprenant un bac d'augmentation de pH associé à une tour d'entraînement à l'air 4 et un décanteur secondaire, caractérisé en ce que le lit bactérien utilisé est un lit à ruissellement 2 à garnissage à pourcentage de vide supérieur à 90% mais d'une surface spécifique supérieure à 80 m²/m³, et en ce que le bac d'augmentation de pH est un bac de floculation alimenté en chaux, placé en amont du décanteur secondaire.

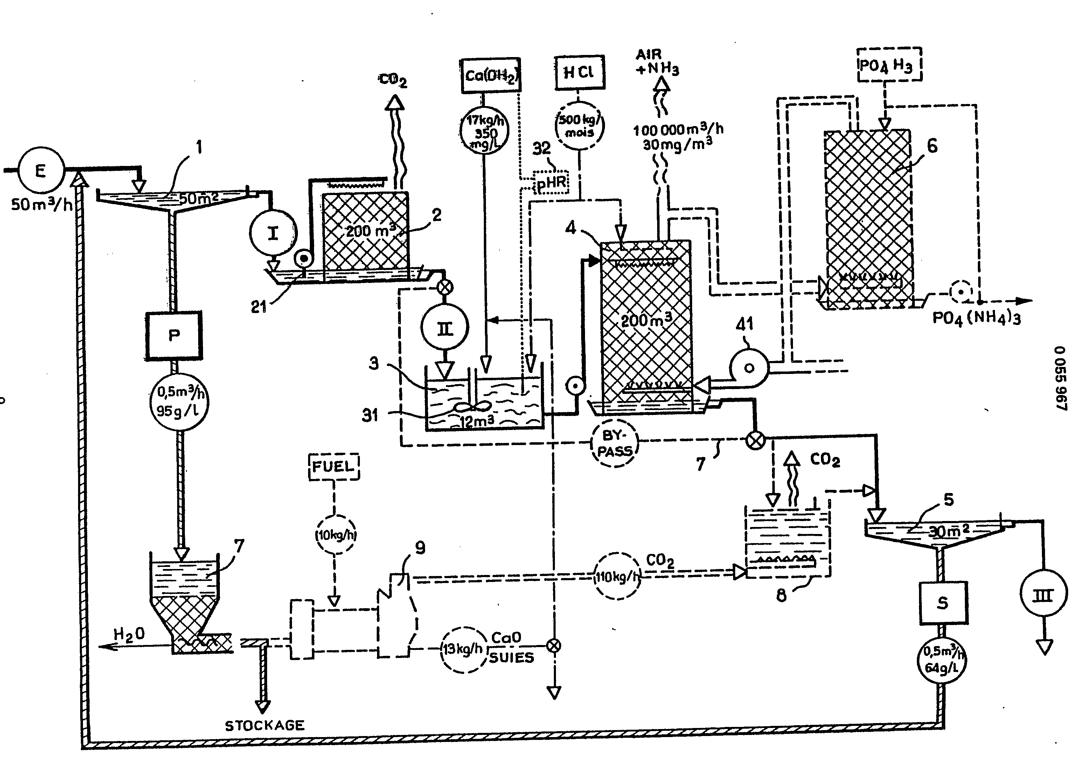

Une mise en œuvre du procédé objet de l'invention est schématisée sur la figure dans le cas du traitement d'un effluent urbain et les données chiffrées correspondantes, débits et charges horaires pour l'effluent (4 stades) et pour les boues (2 stades) en

DCO: demande chimique en oxygène

$DBO_5$: demande biologique en oxygène à 5 h
MES: matières en suspension, dont:
BBP boues biologiques primaires
BBS boues biologiques secondaires et sels minéraux
$C_{OT}$: carbone organique total soluble ou en suspension
$N_{NTK}$: azote total, ammoniacal ou en suspension dosé par la méthode Kjeldahl
$P_{OT}$: phosphore organique total
sont portées dans le tableau annexé pour un débit à traiter de 50 m³/h.

L'effluent brut (E) préalablement dégrillé, dont la composition est donnée dans la colonne de gauche du tableau, est reçu dans un décanteur primaire 1 vers lequel, de préférence, seront aussi recyclées, comme on le verra, les boues secondaires du procédé; ce décanteur a la double fonction de protéger le lit bactérien aval contre les encrassements et de réduire la charge organique à traiter.

L'effluent I décanté, dont la composition est donnée dans la colonne correspondante I du tableau, alimente le lit bactérien à ruissellement 2, constitué d'anneaux en matière plastique annelés d'une surface spécifique de 230 m²/m³ (marque Flocor®, équipé d'une pompe d'arrosage 21 et calculé pour fournir sur la $DBO_5$ un taux d'épuration voisin de 80%, c'est-à-dire sur la base de 2 kg/d de $DBO_5$/m³, de façon à obtenir la transformation de l'azote organique en azote ammoniacal, mis à part une faible quantité, exportée par les boues biologiques en excès qui seront séparées en aval.

La lenteur de développement des bactéries nitrifiantes permet d'absorber sans inconvénient les variations diurnes, de sorte que, sous réserve d'un éventuel stockage de régularisation en tête de l'installation, la capacité ci-dessus peut se calculer sur la charge moyenne. S'il faut absorber des variations saisonnières notables, il pourra devenir nécessaire de concevoir le lit bactérien sous la forme d'une batterie d'éléments distincts alimentés en parallèle et ainsi susceptibles d'être connectés séparément.

L'effluent II traité sur le lit bactérien a la composition donnée en colonne II du tableau. Il est reçu dans un bac de floculation 3, équipé d'un agitateur 31 et d'une régulation de pH 32, où son pH est relevé jusqu'à la valeur de 10,5 environ par un apport de chaux fraîche ou en partie au moins recyclée sous la forme des cendres en provenance d'un four d'incinération de boues calcaires, comme on le verra ultérieurement.

L'effluent chaulé alimente une tour de stripping 4, équipée d'un système de ventilation forcée 41, capable de fournir un débit d'environ 100 000 m³/h: l'ammoniac est ainsi rejeté à l'atmosphère à une concentration inférieure à 30 mg/m³. L'effluent débarrassé du gaz ammoniac est reçu dans un décanteur secondaire 5 où sont séparés les boues biologiques en excès produites par le lit bactérien et divers précipités de calcium et de phosphore.

Dans une variante du procédé, l'air chargé d'ammoniac peut être traité dans une seconde tour d'absorption 6, sur laquelle, par exemple, on fera circuler une solution d'acide phosphorique, avec pour avantage de produire une solution à valeur d'engrais, de supprimer le rejet d'ammoniac à l'atmosphère et de pouvoir faire travailler l'air en circuit fermé, évitant l'apport de gaz carbonique atmosphérique, ce qui supprime les risques d'encroûtage.

Dans le cas du stripping en circuit ouvert, la possibilité de rinçage périodique de la tour par une solution acide, par exemple une solution d'acide chlorhydrique, doit être prévue; un by-pass 7 permet alors d'alimenter directement le décanteur secondaire à partir du lit bactérien.

Lorsque le rejet d'effluents basiques ne peut être toléré, il sera installé, en amont du décanteur, un bassin de carbonatation 8 où la neutralisation de l'effluent chaulé et strippé sera effectuée par injection de gaz carbonique contenu dans des fumées: cette neutralisation précipite des boues de carbonate de calcium également séparées dans le décanteur 5. C'est l'hypothèse ici retenue.

A la sortie du décanteur, l'eau épurée III, aux normes de rejet souhaitées, a la composition donnée dans la colonne III du tableau.

Les boues S du décanteur secondaire 5 sont recyclées au décanteur primaire comme il a été dit précédemment et les boues P du procédé sont extraites en totalité du décanteur primaire. Les unes et les autres ont la composition donnée respectivement dans les colonnes correspondantes S et P du tableau. Elles sont déshydratées jusqu'à une valeur convenable pour être mises en décharge ou bien, dans une variante du procédé déjà évoquée, pour être incinérées et calcinées dans un incinérateur 9. Dans ce cas, les fumées de l'incinérateur seront avantageusement utilisées pour effectuer la carbonatation de la chaux, et les cendres basiques résultant de la décomposition du carbonate de calcium pour diminuer considérablement l'apport de chaux fraîche dans le procédé; une partie des cendres doit être toutefois éliminée de la boucle du procédé, afin d'éviter l'accroissement excessif des teneurs en phosphore et en suies de carbone comme on le verra ultérieurement.

L'effluent chaulé alimente une tour de stripping 4, équipée d'un système de ventilation forcée 41 capable d'un débit d'environ 100 000 m³/h: l'ammoniac est ainsi rejeté à l'atmosphère à une concentration inférieure à 30 mg/m³. L'effluent débarrassé du gaz ammoniac est reçu dans un décanteur secondaire 5 où sont séparés les boues biologiques en excès produites par le lit bactérien et divers précipités de calcium et de phosphore.

Dans une variante du procédé, l'air chargé d'ammoniac peut être traité dans une seconde tour d'absorption 6, sur laquelle, par exemple, on fera circuler une solution d'acide phosphorique, avec pour avantage de produire une solution à valeur d'engrais, de supprimer le rejet d'ammoniac à l'atmosphère et de pouvoir faire travailler l'air en circuit fermé évitant l'apport de gaz carbonique atmosphérique, ce qui supprime les risques d'encroûtage.

Dans le cas du stripping en circuit ouvert, la possibilité de rinçage périodique de la tour par une solution acide, par exemple une solution d'acide chlorhydrique, doit être prévue; un by-pass 7 permet alors d'alimenter directement le décanteur secondaire à partir du lit bactérien.

Lorsque le rejet d'effluents basiques ne peut être toléré, il sera installé, en amont du décanteur, un bassin de carbonatation 8 où la neutralisation de l'effluent chaulé et strippé sera effectuée par injection de gaz carbonique contenu dans des fumées: cette neutralisation précipite des boues de carbonate de calcium également séparées dans le décanteur 5.

A la sortie du décanteur, l'eau épurée III, aux normes de rejet souhaitées, a la composition donnée dans la colonne III du tableau.

Les boues S du décanteur secondaire 5 sont recyclées au décanteur primaire comme il a été dit précédemment et les boues P du procédé sont extraites en totalité du décanteur primaire. Les unes et les autres ont la composition donnée respectivement dans les colonnes correspondantes S et P du tableau. Elles sont déshydratées jusqu'à une valeur convenable pour être mises en décharge ou bien, dans une variante du procédé déjà évoquée, pour être incinérées et calcinées dans un incinérateur 9. Dans ce cas, les fumées de l'incinérateur seront avantageusement utilisées pour effectuer la carbonatation de la chaux, et les cendres basiques résultant de la décomposition du carbonate de calcium pour diminuer considérablement l'apport de chaux fraîche dans le procédé; une partie des cendres doit être toutefois éliminée de la boucle du procédé, afin d'éviter l'accroissement excessif des teneurs en phosphore et en suies de carbone.

*Tableau →*

## Revendications

1. Procédé d'épuration d'eaux résiduaires qui renferment des produits organiques azotés, comprenant, après dégrillage et clarification primaire, un traitement d'oxydation biologique et une floculation suivie d'une clarification secondaire, permettant de réduire leur teneur résiduelle en produits azotés, caractérisé en ce que le traitement biologique s'effectue sur un lit bactérien aérobie à ruissellement à pourcentage de vide supérieur à 90%, mais d'une surface spécifique supérieure à 80 m²/m³, interrompant le traitement biologique avant transformation complète des matières carbonées, l'augmentation consécutive de pH s'effectuant par une base forte alcalino-terreuse et provoquant la floculation que l'on fait suivre d'un dégazage par entraînement à l'air.

2. Procédé selon la revendication 1, caractérisé en ce que le volume du lit en regard de la charge appliquée conduit à un taux d'épuration moyen compris entre 70 et 85%.

3. Procédé selon l'une des revendications précédentes, caractérisé en ce que l'ensemble de la floculation et de l'entraînement à l'air s'effectue

**Tableau**

| Débit (m³/h) | E 50 | | I 50 | | II 50 | | III 50 | | S 0,5 | | P 0,5 | |
|---|---|---|---|---|---|---|---|---|---|---|---|---|
| Charges | (mg/l) | (kg/h) | (mg/l) | (kg/h) | (mg/l) | (kg/h) | (mg/l) | (kg/h) | (mg/l) | (kg/h) | (mg/l) | (kg/h) |
| DCO | 700 | 35 | 420 | 21 | 50 | 2,5 | 25 | 1,25 | — | — | — | — |
| DBO₆ | 360 | 18 | 220 | 11 | 150 | 7,5 | 30 | 1,5 | 64 | 32 | — | — |
| MES, dont: | 410 | 20,5 | 100 | 5 | — | — | — | — | — | — | 95 | 47,5 |
| – BBP | 410 | 20,5 | — | — | — | — | — | — | — | — | 31 | 15,5 |
| – BBS | — | — | — | — | — | — | — | — | 16 | 8 | 16 | 8 |
| – CO₃Ca | — | — | — | — | — | — | — | — | 47 | 23,5 | 47 | 23,5 |
| – (PO₄)₂Ca₃ | — | — | — | — | — | — | — | — | 0,16 | 0,8 | 0,16 | 0,8 |
| renfermant C_OT, dont: | 220 | 11 | 130 | 6,5 | 74 | 3,7 | 16 | 0,8 | — | — | — | — |
| – C soluble | — | — | — | — | 44 | 2,2 | 14 | 0,7 | — | — | — | — |
| – C en suspension | — | — | — | — | 30 | 1,5 | 2 | 0,1 | — | — | — | — |
| N_NTK, dont: | 70 | 3,5 | 60 | 3 | 60 | 3 | 10 | 0,5 | — | — | — | — |
| – NH₃ | — | — | — | — | 47 | 2,35 | — | — | — | — | — | — |
| – N suspension | — | — | — | — | 13 | 0,65 | — | — | — | — | — | — |
| P | 20 | 1 | 18 | 0,9 | 18 | 0,9 | 0,2 | 0,01 | 0,2 | 0,1 | 0,2 | 0,1 |

immédiatement après le traitement biologique, la totalité des boues engendrées par le processus étant séparée en aval, au cours de l'étape de clarification finale du liquide.

4. Procédé selon la revendication 3, caractérisé en ce que les eaux traitées sont neutralisées par l'anhydride carbonique, mais cela avant clarification.

5. Procédé selon la revendication 4, caractérisé en ce que les boues de décantation sont calcinées, les fumées produites utilisées pour carbonater les eaux traitées, et les cendres pour diminuer l'apport de chaux fraîche au stade de la floculation.

6. Procédé selon l'une des revendications précédentes, caractérisé en ce que les boues de clarification obtenues sont recyclées vers le traitement primaire de décantation placé en tête, pour y augmenter la concentration des boues correspondantes d'avec lesquelles elles sont définitivement séparées.

7. Procédé selon l'une des revendications précédentes, caractérisé en ce que l'air chargé d'entraîner l'ammoniac circule en circuit fermé, subissant un lavage acide après la phase d'entraînement.

8. Procédé selon l'une des revendications précédentes, appliqué à un effluent brut riche en nitrates et caractérisé en ce qu'une zone anoxique est prévue en tête du traitement biologique.

9. Dispositif pour la mise en œuvre du procédé d'épuration des eaux résiduaires selon les revendications précédentes, comprenant, en aval d'un étage primaire de clarification (1), un étage secondaire de traitement biologique sur un lit bactérien (2) suivi d'un étage tertiaire comprenant un bac d'augmentation de pH associé à une tour d'entraînement à l'air (4) et un décanteur secondaire, caractérisé en ce que le lit bactérien utilisé est un lit à ruissellement (2) à garnissage de vide supérieur à 90% mais d'une surface supérieure à 80 m²/m³, et en ce que le bac d'augmentation de pH est un bac de floculation alimenté en chaux, placé en amont du décanteur secondaire.

10. Dispositif selon la revendication 9, caractérisé en ce que l'étage de traitement biologique est formé d'une batterie de lits bactériens d'une surface de garnissage inférieure à 125 m²/kg/d de charge moyenne à traiter exprimé en DBO$_5$.

11. Dispositif selon l'une des revendications 9 ou 10, caractérisé en ce que le décanteur secondaire est placé en aval de l'ensemble des étages de floculation (3) et d'entraînement à l'air (4) et constitue ainsi le décanteur final (5) d'épuration du liquide.

12. Dispositif selon la revendication 11, caractérisé par un incinérateur de boues (9) dont un transporteur renvoie les cendres vers les trémies d'alimentation du bac de floculation et dont les conduits de fumées alimentent un bassin de carbonatation (8), ce bassin étant, de plus, placé entre la tour d'entraînement à l'air (4) et le décanteur secondaire (5).

13. Dispositif selon la revendication 11, caractérisé par une installation de recyclage des boues (S) du décanteur secondaire vers l'étage primaire (1) de décantation, à partir duquel l'ensemble des boues (P) est définitivement éliminé.

14. Dispositif selon l'une des revendications 9 à 13, caractérisé par une tour de lavage acide (6) fermant le circuit de circulation d'air (41) de la tour d'entraînement.

15. Dispositif selon l'une des revendications 9 à 14, équipé d'une cuve anoxique en tête de l'étage de traitement biologique à ruissellement.

## Patentansprüche

1. Verfahren zum Reinigen von organische Stickstoffprodukte enthaltenden Abwässern, bei welchem nach der Rechenreinigung und ersten Klärung eine biologische Oxidationsbehandlung und eine Flockung, gefolgt von einer zweiten Klärung stattfinden, um den Restgehalt an Stickstoffprodukten reduzieren zu können, dadurch gekennzeichnet, dass die biologische Behandlung über ein Bett aus aeroben Bakterien mit Berieselung und einem Hohlstellenanteil von mehr als 90%, aber einer spezifischen Oberfläche von mehr als 80 m²/m³ vorgenommen wird, wobei die biologische Behandlung vor der vollständigen Umwandlung der kohlenstoffhaltigen Materialien unterbrochen und die nachfolgende Erhöhung des pH-Werts durch eine starke Erdalkalibase bewirkt wird, die die Flockung auslöst, auf welche man eine Entgasung durch Abtreiben mit Luft folgen lässt.

2. Verfahren nach Anspruch 1, dadurch gekennzeichnet, dass das Volumen des Bett hinsichtlich der aufgebrachten Charge ein mittleres Reinigungsverhältnis zwischen 70 und 85% bewirkt.

3. Verfahren nach einem der vorhergehenden Ansprüche, dadurch gekennzeichnet, dass die Flockung und das Abtreiben mit Luft zusammen unmittelbar nach der biologischen Behandlung erfolgen, wobei die Gesamtheit der beim Prozess entstandenen Schlämmen während der Endstufe der Klärung der Flüssigkeit stromabwärts abgetrennt wird.

4. Verfahren nach Anspruch 3, dadurch gekennzeichnet, dass die aufbereiteten Wässer mittels Kohlendioxid neutralisiert werden, und zwar vor der Klärung.

5. Verfahren nach Anspruch 4, dadurch gekennzeichnet, dass die Dekantationsschlämme kalziniert werden, wobei die erzeugten Rauchgase zur Sättigung der aufbereiteten Wässer mit Kohlendioxid und die Asche zur Reduzierung der Zufuhr von frischem Kalk in der Flockungsstufe verwendet werden.

6. Verfahren nach einem der vorhergehenden Ansprüche, dadurch gekennzeichnet, dass die erhaltenen Klärschlämme zur ersten, am Kopf befindlichen Dekantationsbehandlung rückgeführt werden, um dort die Konzentration der jeweiligen Schlämme, mit denen sie endgültig abgetrennt werden, zu erhöhen.

7. Verfahren nach einem der vorhergehenden Ansprüche, dadurch gekennzeichnet, dass die zum Abtreiben des Ammoniaks eingebrachte Luft im geschlossenen Kreislauf zirkuliert und nach der Abtreibphase einer Säurewaschung unterzogen wird.

8. Verfahren nach einem der vorhergehenden Ansprüche, angewendet bei einem unaufbereiteten nitratreichen Abwasser und dadurch gekennzeichnet, dass am Beginn der biologischen Behandlung eine sauerstofffreie Zone vorgesehen ist.

9. Vorrichtung zur Durchführung des Verfahrens zum Reinigen von Abwässern nach den vorhergehenden Ansprüchen, mit einer stromabwärts von einer ersten Stufe zur Klärung (1) befindlichen zweiten Stufe zur biologischen Behandlung über ein Bakterienbett (2), gefolgt von einer dritten Stufe mit einem an einen Abtreibturm mit Luft (4) angeschlossenen Behälter zur Erhöhung des pH-Werts und einem zweiten Dekanter, dadurch gekennzeichnet, dass das verwendete Bakterienbett ein Berieselungsbtt (2) mit Packung mit einem Hohlstellenanteil von mehr als 90%, aber einer spezifischen Oberfläche von mehr als 80 m²/m³ ist und dass der Behälter zur Erhöhung des pH-Werts ein mit Kalk gespeister, stromaufwärts des zweiten Dekanters angeordneter Flockungsbehälter ist.

10. Vorrichtung nach Anspruch 9, dadurch gekennzeichnet, dass die Stufe der biologischen Behandlung durch eine Batterie von Bakterienbetten mit einer Packungsfläche von weniger als 125 m² pro kg/d mittlerer Behandlungscharge, ausgedrückt als $BSB_5$, ist.

11. Vorrichtung nach einem der Ansprüche 9. und 10, dadurch gekennzeichnet, dass der zweite Dekanter stromabwärts der aus Flockungsstufe (3) und Abtreibstufe mit Luft (4) gebildeten Gruppe angeordnet ist und so den Enddekanter (5) zur Reinigung der Flüssigkeit darstellt.

12. Vorrichtung nach Anspruch 11, gekennzeichnet durch einen Schlammverbrenner (9), von dem ein Förderer die Asche zu den Trichtern für die Speisung des Flokkungsbehälters befördert und von dem die Rauchleitungen ein Becken (8) zur Kohlendioxidsättigung speisen, welches Becken übrigens zwischen dem Abtreiturm mit Luft (4) und dem zweiten Dekanter (5) angeordnet ist.

13. Vorrichtung nach Anspruch 11, gekennzeichnet durch eine Einrichtung zur Rückführung der Schlämme (S) des zweiten Dekanters zur ersten Stufe (1) der Dekantation, aus der die Gesamtheit der Schlämme (P) endgültig entfernt wird.

14. Vorrichtung nach einem der Ansprüche 9 bis 13, gekennzeichnet durch einen Turm zur Säurewaschung (6), der den Luftzirkulationskreis (41) des Abtreibturms schliesst.

15. Vorrichtung nach einem der Ansprüche 9 bis 14, ausgestattet mit einer sauerstofffreien Wanne am Kopf der Stufe zur biologischen Behandlung mit Berieselung.

## Claims

1. Process for purifying waste waters containing nitrogenous organic products, said process comprising after grit removal and primary clarification a treatment for biological oxidizing and flocculation followed by a secondary clarification, enabling to reduce their residual content in nitrogenous products, characterized in that the biological treatment is carried out on a trickling bacterial aerobic bed with a percentage of vacuum superior to 90% but with a specific surface superior to 80 m²/m³, interrupting the biological treatment before complete transformation of carbonaceous matters, the consecutive increase in pH being achieved via a strong alkaline-earth base and inducing the flocculation which is followed by an air-driven degasification.

2. Process according to Claim 1, characterized in that the volume of the bed with respect to the applied load leads to an average purifying rate comprised between 70 and 85%.

3. Process according to any one of the preceding claims, characterized in that the flocculation and air drive are, as a whole, carried out immediately after the biological treatment, all the sludges generated by this process being separated downstream, during the step of final clarification of the liquid.

4. Process according to Claim 3, characterized in that the treated waters are neutralized by carbonic acid gas, but before clarification.

5. Process according to Claim 4, characterized in that the settling sludges are calcined, the smokes produced are used to carbonate the treated waters, and the ashes are used to diminish the input of fresh chalk at the stage of flocculation.

6. Process according to any one of the preceding claims, characterized in that the clarification sludges obtained are recycled towards the settling primary treatment, which comes at the beginning to increase the concentration of corresponding sludges with which they are definitively separated.

7. Process according to any one of the preceding claims, characterized in that the air, the purpose of which being to carry ammonia away, circulates in closed circuit, and undergoes an acid wash after the carrying away phase.

8. Process according to any one of the preceding claims, applied to a crude effluent with a high content of nitrate, and characterized in that an anoxic zone is provided at the start of the biological treatment.

9. Device for carrying out the waste waters purifying process according to the preceding claims, comprising, downstream of a primary clarification stage (1), a secondary stage of biological treatment on a bacterial bed (2) followed by a tertiary stage comprising a tank for raising pH associated with a tower for air drive (4) and a secondary decanter, characterized in that the bacterial bed used is a trickling bed with lining having a vacuum percentage higher than 90% but a specific surface higher than 80 m²/m³ and in that the tank for raising pH is a flocculation tank fed with lime, disposed downstream of the secondary decanter.

10. Device according to Claim 9, characterized in that the biological stage treatment is composed of a battery of bacterial beds with a lining surface lower than 125 cm² per kg/d of average load to be treated expressed in DBO₅.

11. Device according to any one of Claims 9 and 10, characterized in that the secondary decanter is disposed downstream of all the flocculation (3) and air drive (4) stages and therefore constitutes the final decante (5) for liquid purifying.

12. Device according to Claim 11, characterized in that it comprises a sludge incinerator (9), a conveyor of which carries the ashes towards the feed hoppers of the flocculation tank, the smoke pipes of said hoppers supply a carbonation basin (8), said basin being further placed between the tower for air drive (4) and the secondary decanter (5).

13. Device according to Claim 11, characterized in that it comprises an installation for recycling the sludges (S) of the secondary decanter towards the primary decantation stage (1), from which stage all sludges (P) are definitely eliminated.

14. Device according to any one of Claims 9 to 13, characterized in that it comprises a tower for acid washing (6) closing the air circulation circuit (41) of the driving tower.

15. Device according to any one of Claims 9 to 14, provided with an anoxic tank at the start of the stage of the trickling biological treatment.